# EUROPÄISCHE PATENTSCHRIFT

(11) **EP 3 818 201 B1**
(45) Veröffentlichungstag und Bekanntmachung des Hinweises auf die Patenterteilung: **17.08.2022**
(21) Anmeldenummer: 19731256.4
(22) Anmeldetag: 14.06.2019
(51) Int. Cl.: D01G 15/24, F16F 7/104

(54) **KARDIERELEMENT**
CARDING ELEMENT
ÉLÉMENT CARDANT

(30) Priorität: 05.07.2018 DE 102018116252
(43) Veröffentlichungstag der Anmeldung: 12.05.2021
(73) Patentinhaber: Trützschler Group SE, 41199 Mönchengladbach (DE)
(72) Erfinder: SOBOTKA, Andreas, 50859 Köln (DE)
(86) Internationale Anmeldenummer: PCT/EP2019/065679
(87) Internationale Veröffentlichungsnummer: WO 2020/007591

(56) Entgegenhaltungen:
- EP-A1- 0 195 905

## Beschreibung

Die vorliegende Erfindung betrifft ein Kardierelement für eine Karde oder Krempel nach dem Oberbegriff von Anspruch 1.

Bei Karden oder Krempeln ist die Verwendung von Kardierelementen in Form von ortsfesten Kardierelementen oder umlaufender Kardierstäbe (Deckelstäbe) hinreichend bekannt. Ortsfeste Kardierelemente können beispielsweise mittels Befestigungsplatten, die im Bereich der beiden Stirnseiten angeordnet sind, am Verlängerungsbogen der Karde befestigt werden. Das Kardierelement wird dann mittels einer weiteren Platte an der Befestigungsplatte montiert, wobei zwischen der Platte und der Befestigungsplatte im Bereich der beiden Stirnseiten eine Einstellvorrichtung angeordnet ist, mit der der Abstand und der Winkel des Kardierelementes zur Trommel einstellbar ist. Eine Vorrichtung nach diesem Stand der Technik ist in der DE 202005005200 A1 beschrieben.

Die DE 102004033509 B4 offenbart einen Deckelstab mit einer magnetischen Befestigung für eine Garnitur, wobei der Deckelstab mit einer Vielzahl von anderen Deckelstäben umlaufend an einem Wanderdeckel angeordnet ist.

Die EP 0195905 A1 offenbart ein Kardierelement mit einem entlang der Längsachse angeordneten Hohlprofil, das aus einem nahtlosen Rohr hergestellt wird.

Das Kardierergebnis beim Betrieb einer Karde oder Krempel ist unmittelbar abhängig vom Abstand der rotierenden Walzen und einem der Walze gegenüberliegenden Kardierelement oder einer weiteren Walze wie Arbeiter- oder Wirrwalze, Abnehmerwalze oder weiteren Bauteilen. Beim Kardierabstand, welcher den Spalt zwischen der Walze und den Deckelstäben beschreibt, muss der Kardierabstand so eingestellt werden, dass ein gewünschtes Kardierergebnis erreicht wird. Sowohl der Deckelstab oder das Festkardierelement als auch die Walze können eine Garnitur aufweisen, wobei der Kardierabstand gemessen wird zwischen den Spitzen der Garnituren, und wobei die Größe des Kardierabstandes ein wesentlicher Maschinenparameter ist, welcher sowohl das Kardierergebnis als auch das Laufverhalten der Karde prägt. Zur Erzielung einer hohen Kardierqualität wird versucht, bei jeder Fasermischung und jedem Temperaturniveau den Kardierspalt möglichst klein zu halten. Dabei besteht die Gefahr, dass aufgrund von Fertigungstoleranzen in Verbindung mit den Produktionsbedingungen einzelne Spitzen der Garnitur der Kardierelemente mit den Garniturenzähnen der Trommel in Kontakt kommen. Bei einer Häufung der Kontakte können die entstehenden Kräfte aufgrund der Kollision so groß werden, dass die zugehörigen Bauteile versagen und die Karde beschädigt wird. Dabei muss bei längerem Betrieb der Karde sichergestellt werden, dass sich die Bauteile, insbesondere die Spitzen der Garniturzähne nicht berühren.

Auch wenn die Festkardierelemente ortsfest an der Karde angeordnet sind und die Deckelstäbe in einer Führung umlaufen, kann aufgrund von Dickstellen im Fasermaterial das feststehende oder umlaufende Kardierelement von der Trommel weg ausgelenkt werden. Die nachfolgende Rückstellbewegung aufgrund der Elastizität der Bauteile kann zu einem Überschwingen führen, so dass das Kardierelement mit der Trommel kollidiert. Dies führt wieder zur Beschädigung der Karde. Um dies zu vermeiden, muss nach heutigem Stand der Technik der Kardierspalt vergrößert werden.

Der Erfindung liegt daher die Aufgabe zugrunde, ein Kardierelement der eingangs beschriebenen Art zu schaffen, das die genannten Nachteile vermeidet.

Die Lösung dieser Aufgabe erfolgt durch die Merkmale von Anspruch 1.

Die Erfindung betrifft ein Kardierelement für eine Karde oder Krempel, umfassend ein Profil mit einem Fußbereich oder einer Grundplatte und einer daran angeordneten Garnitur, wobei innerhalb des Profiles mindestens ein Hohlraum angeordnet ist.

Die Erfindung schließt die technische Lehre ein, dass am oder im Kardierelement mindestens ein Ausgleichsgewicht angeordnet ist, wobei jedes Ausgleichsgewicht mittels einer Feder und/oder einem Dämpfer mit dem Kardierelement verbunden ist. Kerngedanke der Erfindung ist eine Beeinflussung der Eigenkreisfrequenz des Kardierelementes. Bei einer Belastung des Kardierelementes schwingt dieses vergleichbar wie ein Einmassenschwinger. Das gleiche Verhalten zeigt das am Kardierelement angeordnete Ausgleichsgewicht. Erfindungsgemäß überlagern sich beide Schwingungen, so dass sich die Schwingung des Kardierelementes hinsichtlich Amplitude und Zeit reduziert. Bei einer stoßartigen Belastung des Kardierelementes beispielsweise durch eine Faserverdickung reduziert sich die Gegenschwingung, so dass das Kardierelement nicht mit der Garnitur der Trommel in Kontakt kommt. Infolge kann der Kardierspalt kleiner eingestellt werden.

Wird das Ausgleichsgewicht nur mit einem Dämpfer mit dem Kardierelement verbunden, liegt ein dämpfungsgekoppeltes System vor, mit dem hauptsächlich die Höhe der Amplitude der Schwingung reduziert wird. Hiermit kann eine sehr wirkungsvolle Reduzierung der Höhe der Amplitude erreicht werden.

Wird das Ausgleichsgewicht nur mit einer Feder mit dem Kardierelement verbunden, liegt ein steifigkeitsgekoppelter (Schwingungs)Tilger vor, mit dem ebenfalls die Höhe der Amplitude der Schwingung reduziert werden kann.

Die Verbindung des Ausgleichsgewichtes mittels Feder und Dämpfer mit dem Kardierelement ist die praktikabelste und wirkungsvollste Reduzierung der Schwingung, die an einem Kardierelement verwendet werden kann, da die Ausgleichsmasse in Abhängigkeit der Resonanzüberhöhung gering gehalten werden kann.

Mit weiterem Vorteil ist das mindestens eine Ausgleichsgewicht frei schwingend am oder im Kardierelement angeordnet. Damit unterscheidet sich das Ausgleichsgewicht von anderen Bauteilen am Kardierelement, die ebenfalls elastisch befestigbar sind.

Auch ist es von Vorteil, dass das mindestens eine Ausgleichsgewicht in dem mindestens einen Hohlraum des Kardierelementes angeordnet ist. Damit ist das Ausgleichsgewicht vor äußeren Einflüssen geschützt angeordnet und kollidiert nicht mit anderen bewegten Bauteilen.

Eine weitere Ausführungsform sieht mindestens zwei Hohlräume vor, wobei zumindest in einem Hohlraum mindestens ein Ausgleichsgewicht angeordnet ist. Insbesondere für Kardierelemente mit verbesserter Wärmeabfuhr ist der mittlere Steg, der die benachbarten Hohlräume voneinander trennt, ein wichtiges Wärmeleitelement. Damit besteht die Möglichkeit, über die symmetrische oder unsymmetrische Anordnung der Ausgleichsgewichte in den Hohlräumen die Eigenkreisfrequenz des Kardierelementes zu beeinflussen.

Zur vorteilhaften Anordnung ist das mindestens eine Ausgleichsgewicht im Hohlraum am Fußbereich des Kardierelementes angeordnet ist. Das Ausgleichsgewicht bekommt damit im Falle einer außergewöhnlichen Belastung den gleichen Drehimpuls mit, wie das Kardierelement, was vorteilhaft für die Schwingungsdämpfung ist.

In einer bevorzugten Ausführungsform werden die Feder und der Dämpfer durch ein Verbindungselement miteinander kombiniert. Dabei kann das Verbindungselement aus einem elastischen Material, beispielsweise einem Gummi bestehen, das eine Härte von 30 - 70 Shore aufweist. Das Verbindungselement weist gleichzeitig die Eigenschaften der Feder und des Dämpfers auf und vereinfacht die Montage und die Kosten der Herstellung. Die theoretische Federrate und Dämpfung kann rechnerisch bestimmt werden. In Abhängigkeit des Materials des Verbindungselementes, der Masse des Ausgleichsgewichtes und der Anordnung am oder im Kardierelement muss die Härte und damit die Feder- und Dämpfungsrate variiert werden. Hier hat sich der Härtebereich bei einem Gummi oder Kunststoff von 30 - 70 Shore als vorteilhafter Bereich erwiesen.

Das Verbindungselement ist mittels Kleben, Heißschrumpfen oder lösbarer Verbindungselemente am Profil des Kardierelementes befestigbar. Damit ist eine einfache und schnelle Montage des Ausgleichsgewichtes in Serienproduktion möglich.

In Abhängigkeit der Länge des Kardierelementes und der Bauform weist das Gesamtgewicht aller Ausgleichsgewichte eine Masse von 100 g bis 2000 g auf.

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigen:
- Figur 1:: ein erfindungsgemäßes Kardierelement einer Karde;
- Figur 2:: ein weiteres erfindungsgemäßes Kardierelement einer Karde;
- Figur 3:: ein erfindungsgemäßes Festkardierelement einer Krempel oder Karde;
- Figur 4:: zwei Grafiken zum Schwingungsverhalten von Kardierelementen mit und ohne Ausgleichsgewicht.

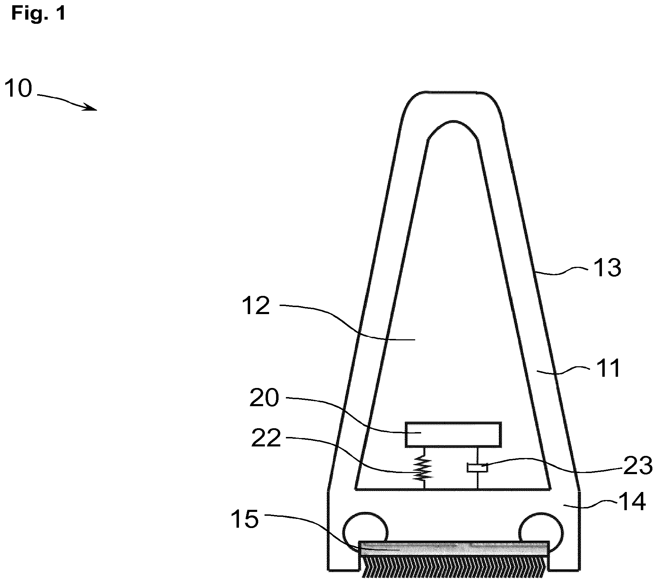

Figur 1 zeigt ein Kardierelement in Form eines klassischen Deckelstabes 10, der durch ein Profil 11 mit einem Fußbereich 14 und einer daran angeordneten Garnitur 15 ausgebildet ist. Das Profil 11 weist einen Deckelstabrücken 13 auf, über den die beim Kardieren entstehende Temperatur abgeleitet wird. Innerhalb des Profils 11 ist ein Hohlraum 12 ausgebildet, in dem mindestens ein Ausgleichsgewicht 20 mit einer Feder 22 und einem Dämpfer 23 am Fußbereich 14 des Kardierelementes angeordnet ist. Bedingt durch das Herstellverfahren von gezogenem Metall erstreckt sich der Hohlraum 12 entlang der gesamten Längserstreckung des Deckelstabes 10. Die Anordnung mehrerer Hohlräume neben- oder übereinander aus der Blickrichtung der Trommel ist für die Erfindung unerheblich, sofern die Hohlräume von den Stirnseiten der Kardierelemente zugänglich sind. Durch das mindestens eine Ausgleichsgewicht 20 in Kombination mit der Feder 22 und dem Dämpfer 23 kann die Eigenkreisfrequenz des Kardierelementes beeinflusst werden. Jedes Ausgleichsgewicht 20 wird mittels einer Feder und eines Dämpfers mit dem Kardierelement verbunden. Als Feder kann eine Druckfeder oder ein anderes Federelement verwendet werden. Als Dämpfer eignen sich beispielsweise Öldämpfer, pneumatische Dämpfer oder Reibungsdämpfer. Vorzugsweise kombiniert ein Verbindungselement die Eigenschaften der Feder 22 und des Dämpfers 23, beispielsweise ein Gummi- oder Kunststoffelement. Bei einer Belastung des Kardierelementes schwingt dieses vergleichbar wie ein Einmassenschwinger. Das gleiche Verhalten zeigt das am Kardierelement angeordnete Ausgleichsgewicht 20. Erfindungsgemäß überlagern sich beide Schwingungen, so dass sich die Schwingung des Kardierelementes hinsichtlich Amplitude und Zeit reduziert. Bei einer stoßartigen Belastung des Kardierelementes beispielsweise durch eine Faserverdickung reduziert sich die Gegenschwingung, so dass das Kardierelement nicht mit der Garnitur der Trommel in Kontakt kommt. Das Ausgleichsgewicht 20 ist in diesem Beispiel am Fußbereich 14 innerhalb des Hohlraumes 12 des Deckelstabes 10 angeordnet. Die Anordnung innerhalb des Hohlraumes 12 kann beliebig erfolgen, beispielsweise auch am Deckelstabrücken. Die Gesamtmasse des oder der Ausgleichsgewichte hängt von der Masse und dem Aufbau (statische Steifigkeit, Eigenkreisfrequenz) des Kardierelementes ab. Das Gesamtgewicht aller Ausgleichsgewichte kann bei jedem Deckelstab mit einer Breite von 1,3 m nach dem Ausführungsbeispiel der Figur 1 bis zu 1600 g betragen. Bei einer geringeren Breite von beispielsweise 1 m kann das Gesamtgewicht bzw. die Gesamtmasse aller Ausgleichsgewichte bis zu 1460 g betragen. Das Gesamtgewicht bzw. die Gesamtmasse kann auf mehrere Ausgleichsgewichte aufgeteilt werden. Die Federrate der Feder 22 hängt von dem Verhältnis des Ausgleichsgewichtes zur Masse des Kardierelementes ab, sowie von der Eigenkreisfrequenz des Ausgleichsgewichtes und des Kardierelementes ab. Die gleichen Berechnungsgrundlagen gelten für die Dämpfungswerte des Dämpfers. Vorzugsweise weist jedes Kardierelement mindestens zwei Ausgleichsgewichte auf, wobei je ein Ausgleichsgewicht in dem Hohlraum 12 im Bereich jeder Stirnseite des Kardierelementes angeordnet ist. Beide Ausgleichsgewichte addieren sich zur berechneten Gesamtmasse an Ausgleichsgewichten, um die Eigenkreisfrequenz des Kardierelementes zu verändern.

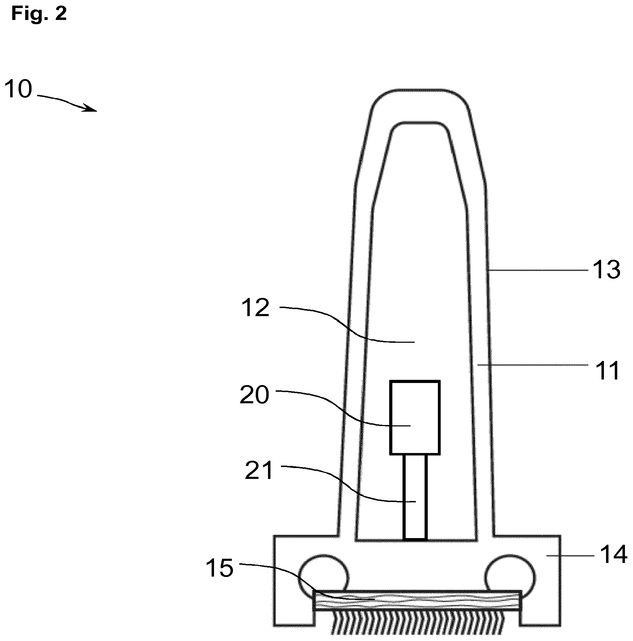

Figur 2 zeigt einen klassischen Deckelstab 10, der durch ein Profil 11 mit einem Fußbereich 14 und einer daran angeordneten Garnitur 15 ausgebildet ist. Das Profil 11 weist einen Deckelstabrücken 13 auf, über den die beim Kardieren entstehende Temperatur abgeleitet wird. Innerhalb des Profils 11 ist ein Hohlraum 12 ausgebildet, in dem mindestens ein Ausgleichsgewicht 20 mit einem Verbindungselement 21 angeordnet ist. Das bzw. die Verbindungselemente 21 ist/sind als kombiniertes Feder-/Dämpferelement ausgebildet, beispielsweise aus Gummi.

Da die Kombination des Feder-/Dämpferelementes hinsichtlich der Werte nicht konkret berechnet werden kann, ist nach einer theoretischen Auslegung das Verbindungselement 21 an die Gegebenheiten des Kardierelementes anzupassen. Dabei haben sich Verbindungselemente 21 aus Gummi oder weichem Kunststoff mit einer Härte von 30 - 70 Shore als besonders wirkungsvoll herausgestellt.

In diesem Ausführungsbeispiel ist nur ein Hohlraum 12 ausgebildet, der mindestens ein Ausgleichsgewicht 20 aufnimmt., vorzugsweise mindestens zwei Ausgleichsgewichte 20, wovon jedes im Bereich der Stirnseiten im Hohlraum 12 angeordnet ist.

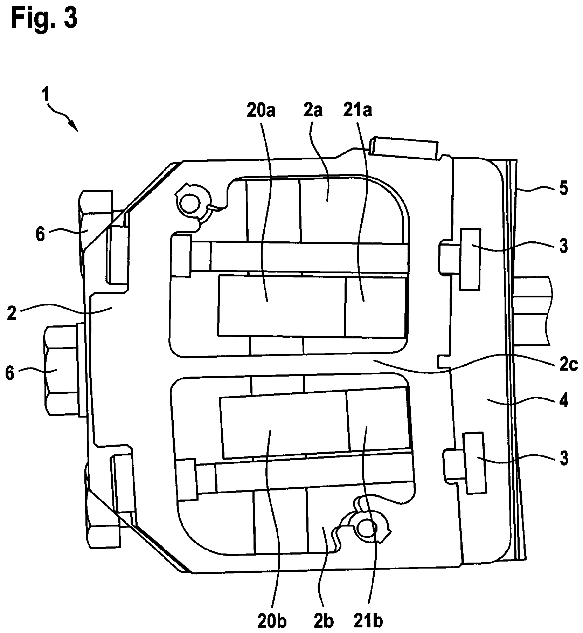

In Figur 3 ist ein Festkardierelement 1 dargestellt, bei dem ein Profil 2 mittels Verbindungselementen an zwei stirnseitig am Festkardierelement angeordneten Grundplatten 4 befestigt ist. Jede Grundplatte 4 wiederum ist am Seitenschild der Karde angeordnet. Zwischen den Grundplatten 4 ist ein hier nicht dargestellter Garniturenträger angeordnet, an dem die Garnitur 5 angeordnet ist. Der Garniturenträger wird mittels der Verbindungselemente 3 am Profil 2 befestigt. Mittels weiterer hier nicht relevanter Einstellmittel 6 lässt sich der Abstand des Festkardierelementes 1 und dessen Neigung zur Kardentrommel einstellen. Das Profil 2 ist als Hohlkammerprofil ausgebildet und weist in diesem Ausführungsbeispiel zwei Hohlräume 2a, 2b auf, die durch einen Steg 2c voneinander getrennt sind. Das Profil 2 kann auch nur einen einzigen Hohlraum 2a oder mehr als zwei Hohlräume aufweisen. Bedingt durch das Herstellverfahren von gezogenem Metall erstrecken sich die Hohlräume 2a, 2b entlang der gesamten Längserstreckung des Profiles 2. Die Anordnung der Hohlräume 2a, 2b neben- oder übereinander aus der Blickrichtung der Trommel ist für die Erfindung unerheblich.

Innerhalb des mindestens einen Hohlraumes 2a, 2b ist mindestens ein Ausgleichsgewicht 20a, 20b angeordnet, mit dem die Eigenkreisfrequenz des Festkardierelementes 1 beeinflusst wird. Jedes Ausgleichsgewicht 20a, 20b wird mittels einer Feder und eines Dämpfers mit dem Festkardierelement 1 verbunden. Vorzugsweise erfolgt die Anordnung des Ausgleichsgewichtes 20a, 20b innerhalb mindestens eines Hohlraumes 2a, 2b am Profil 2 des Festkardierelementes 1 im Bereich der Grundplatte 4, wobei dieser Bereich des Profil 2 als Fußbereich bezeichnet werden kann. Als Feder kann eine Druckfeder oder ein anderes Federelement verwendet werden. Als Dämpfer eignen sich beispielsweise Öldämpfer, pneumatische Dämpfer oder Reibungsdämpfer. Vorzugsweise wird mindestens ein Verbindungselement 21a, 21b verwendet, das die Eigenschaften der Feder und des Dämpfers miteinander vereint, beispielsweise ein Gummi- oder Kunststoffelement. Bei einer Belastung des Festkardierelementes 1 schwingt dieses vergleichbar wie ein Einmassenschwinger. Das gleiche Verhalten zeigt das am Festkardierelement 1 angeordnete Ausgleichsgewicht. Erfindungsgemäß überlagern sich beide Schwingungen, so dass sich die Schwingung des Festkardierelementes 1 hinsichtlich Amplitude und Zeit reduziert. Bei einer stoßartigen Belastung des Festkardierelementes 1 beispielsweise durch eine Faserverdickung reduziert sich die Gegenschwingung, so dass das Festkardierelement 1 nicht mit der Garnitur der Trommel in Kontakt kommt. Das Gesamtgewicht der Ausgleichsgewichte 20a, 20b kann bei dem Kardierelement mit einer Breite von 1,3 m nach dem Ausführungsbeispiel der Figur 1 bis zu 1600 g betragen. Bei einer geringeren Breite von beispielsweise 1,0 m können die Ausgleichsgewichte bis zu 1460 g betragen. Bei dem Festkardierelement 1 der Figur 3 kann je nach Bauart und Profilform die Gesamtmasse der Ausgleichsgewichte bis zu 2000 g betragen. Vorzugsweise weist jedes Kardierelement mindestens zwei Ausgleichsgewichte 20a, 20b auf, wobei je ein Ausgleichsgewicht in dem Hohlraum 12 im Bereich jeder Stirnseite des Kardierelementes angeordnet ist. Beide Ausgleichsgewichte 20a, 20b addieren sich zur berechneten Gesamtmasse an Ausgleichsgewichten, um die Eigenkreisfrequenz des Kardierelementes zu verändern. Bei mehreren Hohlräumen 2a, 2b weist jeder Hohlraum vorzugsweise zwei Ausgleichsgewichte auf, die jeweils im Bereich der Stirnseiten im Hohlraum angeordnet sind. In diesem Ausführungsbeispiel können problemlos vier Ausgleichsgewichte verwendet werden, wovon je zwei Ausgleichsgewichte im Bereich der Stirnseiten des Kardierelementes angeordnet sind. Die Anordnung weiterer Ausgleichsgewichte entlang der Längsachse des Kardierelementes ist selbstverständlich möglich.

Jedes Ausgleichsgewicht kann eine beliebige Form aufweisen, wobei diese vorzugsweise entlang einer Längsachse konturiert der Innenform des Hohlraumes 12 angepasst wird, um aufgrund der Federwirkung einen möglichst großen Abstand zu den Seiten des Hohlraumes aufzuweisen. Die Befestigung der Ausgleichsgewichte nach den Ausführungsformen der Figuren 2 und 3 über das Verbindungselement 21, 21a, 21b kann mittels Kleben, Heißschrumpfen oder lösbarer Verbindungselemente am Profil des Kardierelementes erfolgen. Nach diesen Ausführungsformen sind das oder die Ausgleichsgewichte in einem Hohlraum des Kardierelementes angeordnet. Sie können aber auch an einer Außenseite des Kardierelementes angeordnet werden, sofern diese nicht mit anderen mechanischen Elementen der Karde oder Krempel kollidiert.

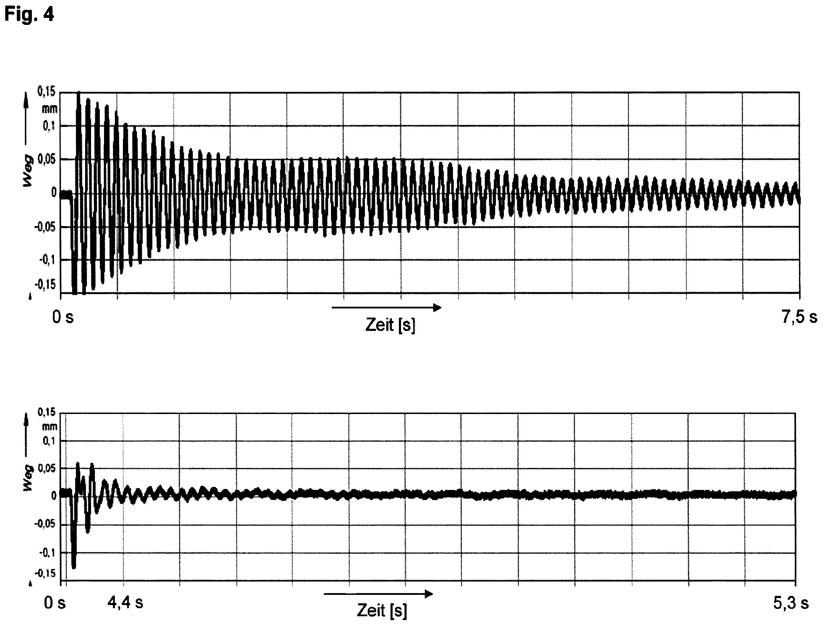

Die nachfolgende Grafik in der Figur 4 zeigt das Schwingungsverhalten eines Kardierelementes in der oberen Grafik ohne Ausgleichsgewicht und in der unteren Grafik mit einem Ausgleichsgewicht.

Die obere Grafik zeigt das Kardierelement ohne Ausgleichsgewicht über eine Zeit bis 7,5 Sekunden:
Die untere Grafik zeigt ein Kardierelement mit zwei Ausgleichsgewichten von jeweils 800 g mit einem kombinierten Feder-/Dämpferelement (Gummimasse) mit 50 Shore über eine Zeit bis 5,3 Sekunden:
Die Schwingung der Kardierelemente wurde in beiden Fällen mit einem Impulshammer gleicher Stärke eingeleitet. Erkennbar ist bei Verwendung eines Ausgleichsgewichtes mit Feder-/Dämpferelement im ersten Spaltenbereich der Grafik nach 4,4 Sekunden eine deutliche Reduzierung der Amplitudenhöhe festzustellen. Der gleiche Wert ergibt sich bei dem Kardierelement ohne Ausgleichsgewicht erst nach 7,5 Sekunden.

### Bezugszeichen

- 1: Festkardierelement
- 2: Profil
- 2a: Hohlraum
- 2b: Hohlraum
- 2c: Steg
- 3: Verbindungselement
- 4: Grundplatte
- 5: Garnitur
- 6: Einstellelement

- 10: Deckelstab
- 11: Profil
- 12: Hohlraum
- 13: Deckelstabrücken
- 14: Fußbereich
- 15: Garnitur

- 20, 20a, 20b: Ausgleichsgewicht
- 21, 21a, 21b: Verbindungselement
- 22: Feder
- 23: Dämpfer

## Patentansprüche

1. Kardierelement für eine Karde oder Krempel umfassend ein Profil mit einem Fußbereich oder einer Grundplatte und einer daran angeordneten Garnitur, wobei innerhalb des Profiles mindestens ein Hohlraum angeordnet ist, **dadurch gekennzeichnet, dass** am oder im Kardierelement mindestens ein Ausgleichsgewicht (20, 20a, 20b) angeordnet ist, wobei jedes Ausgleichsgewicht mittels einer Feder (22) und/oder einem Dämpfer (23) mit dem Kardierelement verbunden ist.

2. Kardierelement nach Anspruch 1, **dadurch gekennzeichnet, dass** das mindestens eine Ausgleichsgewicht (20, 20a, 20b) frei schwingend am oder im Kardierelement angeordnet ist.

3. Kardierelement nach Anspruch 1, **dadurch gekennzeichnet, dass** das mindestens eine Ausgleichsgewicht (20, 20a, 20b) in dem mindestens einen Hohlraum (2a, 2b, 12) des Kardierelementes angeordnet ist.

4. Kardierelement nach Anspruch 1, **dadurch gekennzeichnet, dass** das Kardierelement mindestens zwei Hohlräume (2a, 2b) aufweist, wobei in zumindest einem Hohlraum (2a, 2b) mindestens ein Ausgleichsgewicht (20, 20a, 20b) angeordnet ist.

5. Kardierelement nach Anspruch 3, **dadurch gekennzeichnet, dass** das mindestens eine Ausgleichsgewicht (20, 20a, 20b) im Hohlraum (2a, 2b, 12) am Fußbereich (14) des Kardierelementes angeordnet ist.

6. Kardierelement nach Anspruch 1, **dadurch gekennzeichnet, dass** die Feder (22) und der Dämpfer (23) durch ein Verbindungselement (21, 21a, 21b) kombiniert werden.

7. Kardierelement nach Anspruch 6, **dadurch gekennzeichnet, dass** das Verbindungselement (21, 21a, 21b) aus einem elastischen Material besteht, das eine Härte von 30 - 70 Shore aufweist.

8. Kardierelement nach einem der vorgenannten Ansprüche, **dadurch gekennzeichnet, dass** das Kardierelement als umlaufender Deckelstab (10) einer Karde ausgebildet ist, oder als Festkardierelement (1) einer Krempel oder Karde.

9. Kardierelement nach Anspruch 6 oder 7, **dadurch gekennzeichnet, dass** das Verbindungselement (21, 21a, 21b) mittels Kleben, Heißschrumpfen oder lösbarer Verbindungselemente am Profil des Kardierelementes befestigbar ist.

10. Kardierelement nach einem der vorgenannten Ansprüche, **dadurch gekennzeichnet, dass** das Gesamtgewicht aller Ausgleichsgewichte eine Masse von 100 g bis 2000 g aufweist.

## Claims

1. Carding element for a carding machine or roller card, comprising a profile with a foot area or a base plate and a clothing disposed thereat, wherein at least one hollow space is disposed within the profile, **characterized in that** at least one compensating weight (20, 20a, 20b) is disposed at or in the carding element, wherein each compensating weight is connected to the carding element by means of a spring (22) and/or a damper (23).

2. Carding element according to claim 1, **characterized in that** the at least one compensating weight (20, 20a, 20b) is disposed freely oscillating at or in the carding element.

3. Carding element according to claim 1, **characterized in that** the at least one compensating weight (20, 20a, 20b) is disposed in the at least one hollow space (2a, 2b, 12) of the carding element.

4. Carding element according to claim 1, **characterized in that** the carding element comprises at least two hollow spaces (2a, 2b), wherein at least one compensating weight (20, 20a, 20b) is disposed in at least one hollow space (2a, 2b).

5. Carding element according to claim 3, **characterized in that** the at least one compensating weight (20, 20a, 20b) is disposed in the hollow space (2a, 2b, 12) at the foot area (14) of the carding element.

6. Carding element according to claim 1, **characterized in that** the spring (22) and the damper (23) are combined by a connecting element (21, 21a, 21b).

7. Carding element according to claim 6, **characterized in that** the connecting element (21, 21a, 21b) consists of an elastic material having a shore hardness of 30 to 70.

8. Carding element according to any of the aforementioned claims, **characterized in that** the carding element is formed as a circulating flat bar (10) of a carding machine, or as a fixed carding element (1) of a roller card or carding machine.

9. Carding element according to claim 6 or 7, **characterized in that** the connecting element (21, 21a, 21b) is attachable to the profile of the carding element by means of bonding, hot-shrinking or releasable connecting elements.

10. Carding element according to any of the aforementioned claims, **characterized in that** the total weight of all compensating weights has a mass of 100 g to 2000 g.

## Revendications

1. Élément de cardage pour une carde ou une cardeuse comprenant un profil avec une zone de pied ou une plaque de base et une garniture agencée sur celle-ci, au moins une cavité étant agencée à l'intérieur du profil, **caractérisé en ce qu'**au moins un poids d'équilibrage (20, 20a, 20b) est agencé sur ou dans l'élément de cardage, chaque poids d'équilibrage étant relié à l'élément de cardage au moyen d'un ressort (22) et/ou d'un amortisseur (23).

2. Élément de cardage selon la revendication 1, **caractérisé en ce que** l'au moins un poids d'équilibrage (20, 20a, 20b) est agencé de manière à osciller librement sur ou dans l'élément de cardage.

3. Élément de cardage selon la revendication 1, **caractérisé en ce que** l'au moins un poids d'équilibrage (20, 20a, 20b) est agencé dans l'au moins une cavité (2a, 2b, 12) de l'élément de cardage.

4. Élément de cardage selon la revendication 1, **caractérisé en ce que** l'élément de cardage présente au moins deux cavités (2a, 2b), au moins un poids d'équilibrage (20, 20a, 20b) étant agencé dans au moins une cavité (2a, 2b).

5. Élément de cardage selon la revendication 3, **caractérisé en ce que** l'au moins un poids d'équilibrage (20, 20a, 20b) est agencé dans la cavité (2a, 2b, 12) au niveau de la zone de pied (14) de l'élément de cardage.

6. Élément de cardage selon la revendication 1, **caractérisé en ce que** le ressort (22) et l'amortisseur (23) sont combinés par un élément de liaison (21, 21a, 21b).

7. Élément de cardage selon la revendication 6, **caractérisé en ce que** l'élément de liaison (21, 21a, 21b) est constitué d'un matériau élastique qui présente une dureté de 30 à 70 Shore.

8. Élément de cardage selon l'une quelconque des revendications précédentes, **caractérisé en ce que** l'élément de cardage est configuré sous forme de barre de couverture tournante (10) d'une carde, ou sous forme d'élément de cardage fixe (1) d'une cardeuse ou d'une carde.

9. Élément de cardage selon la revendication 6 ou 7, **caractérisé en ce que** l'élément de liaison (21, 21a, 21b) peut être fixé au profil de l'élément de cardage au moyen d'un collage, d'une thermorétraction ou d'éléments de liaison amovibles.

10. Élément de cardage selon l'une quelconque des revendications précédentes, **caractérisé en ce que** le poids total de tous les poids d'équilibrage présente une masse de 100 g à 2 000 g.
